# EUROPÄISCHE PATENTSCHRIFT

(11) **EP 3 492 330 B1**
(45) Veröffentlichungstag und Bekanntmachung des Hinweises auf die Patenterteilung: **03.03.2021**
(21) Anmeldenummer: 18171007.0
(22) Anmeldetag: 07.05.2018
(51) Int. Cl.: B60W 30/18, B60L 15/20

(54) **VERFAHREN ZUM BETREIBEN EINES KRAFTFAHRZEUGS SOWIE ENTSPRECHENDES KRAFTFAHRZEUG**
MOTOR VEHICLE AND METHOD FOR OPERATING A CORRESPONDING MOTOR VEHICLE
PROCÉDÉ DE FONCTIONNEMENT D'UN VÉHICULE AUTOMOBILE AINSI QUE VÉHICULE AUTOMOBILE CORRESPONDANT

(30) Priorität: 29.11.2017 DE 102017221390
(43) Veröffentlichungstag der Anmeldung: 05.06.2019
(73) Patentinhaber: AUDI AG, 85045 Ingolstadt (DE)
(72) Erfinder: Burow, Clemens, 80339 München (DE)

(56) Entgegenhaltungen:
- WO-A1-2006/133993
- DE-A1-102008 043 560
- DE-T5-112008 001 444
- DE-T5-112011 101 678
- US-A1- 2002 088 653
- US-A1- 2013 197 733
- US-A1- 2017 080 946

## Beschreibung

Die Erfindung betrifft ein Verfahren zum Betreiben eines Kraftfahrzeugs, wobei das Kraftfahrzeug eine elektrische Traktionsmaschine aufweist. Die Erfindung betrifft weiterhin ein Kraftfahrzeug.

Aus dem Stand der Technik ist beispielsweise die Druckschrift DE 10 2015 214 839 A1 bekannt. Diese betrifft ein Verfahren zum zeitdiskreten Regeln eines elektronisch kommutierten Elektromotors, insbesondere eines elektrischen Antriebsmotors eines Kraftfahrzeugs, mithilfe eines zeitdiskreten Modulationsverfahrens, wobei zunächst wenigstens eine Regelgröße erfasst und nachfolgend wenigstens eine Stellgröße gebildet wird, wobei eine Regelfrequenz und eine Modulationsfrequenz voneinander gesondert eingestellt werden, um das Verfahren zu verbessern US2002/088653 A1 (Takamoto Yuusuke et al.) offenbart ein Elektrofahrzeug mit einer Motorhaltefunktion auf einer abfallenden Straße.

Es ist Aufgabe der Erfindung, ein Verfahren zum Betreiben eines Kraftfahrzeugs vorzuschlagen, welches gegenüber bekannten Verfahren Vorteile aufweist, insbesondere ein sanftes Anfahren des Kraftfahrzeugs aus dem Stillstand realisiert beziehungsweise ermöglicht.

Dies wird erfindungsgemäß mit einem Verfahren zum Betreiben eines Kraftfahrzeugs mit den Merkmalen des Anspruchs 1 erreicht.

Das Kraftfahrzeug verfügt über die elektrische Traktionsmaschine. Diese ist zum Antreiben des Kraftfahrzeugs und insoweit zum Breitstellen eines auf das Antreiben des Kraftfahrzeugs gerichteten Drehmoments vorgesehen und ausgebildet. Das Kraftfahrzeug verfügt üblicherweise über eine Betriebsbremse sowie über eine Feststellbremse. Erstere dient zum zeitweisen Verzögern und/oder Halten des Kraftfahrzeugs während eines Fahrbetriebs des Kraftfahrzeugs. Zum Betreiben der Betriebsbremse muss üblicherweise zum Aufrechterhalten eines auf das Verzögern beziehungsweise Halten des Kraftfahrzeugs gerichteten Bremsdrehmoments Energie aufgewandt werden, beispielsweise - im Falle einer hydraulischen Betriebsbremse - zum Aufrechterhalten eines bestimmten Hydraulikdrucks.

Die Feststellbremse hingegen ist derart ausgestaltet, dass sie das Kraftfahrzeug ohne permanente Energiezufuhr festsetzen kann. Die Feststellbremse kann insoweit in zwei unterschiedlichen Betriebszuständen vorliegen. In einem ersten Betriebszustand gibt sie eine Bewegung des Kraftfahrzeugs frei, dient also gerade nicht dem Festsetzen des Kraftfahrzeugs. In einem zweiten Betriebszustand setzt sie hingegen das Kraftfahrzeug fest. Hierzu wirkt sie auf wenigstens ein Rad des Kraftfahrzeugs, vorzugweise auf mehrere Räder des Kraftfahrzeugs.

Beispielsweise wirkt die Feststellbremse zum Halten des Kraftfahrzeugs auf mehrere oder alle Räder einer Radachse, insbesondere einer Hinterradachse, des Kraftfahrzeugs. Zum Umschalten zwischen dem ersten Betriebszustand und dem zweiten Betriebszustand beziehungsweise umgekehrt, muss Energie aufgewandt werden, nicht hingegen zum Halten des jeweiligen Betriebszustands. Das bedeutet, dass mithilfe der Feststellbremse das Kraftfahrzeug auch über einen längeren Zeitraum ohne Energieaufwand festgesetzt werden kann.

Steht das Kraftfahrzeug mit geschlossener Feststellbremse, also in dem zweiten Betriebszustand der Feststellbremse, an einer Steigung, so wird das Kraftfahrzeug zunächst allein von der Feststellbremse gehalten entgegen einer Kraft, die von einem Schwerkrafteinfluss auf das Kraftfahrzeug aufgrund der Steigung ausgeübt wird. Zum Anfahren des Kraftfahrzeugs auf der Steigung kann es nun vorgesehen sein, zunächst mittels eines Antriebsaggregats des Kraftfahrzeugs, beispielsweise der Traktionsmaschine oder einer Brennkraftmaschine, ein auf das Antreiben des Kraftfahrzeugs gerichtetes Drehmoment aufzubauen, welches einer Verlagerung des Kraftfahrzeugs entgegengerichtet ist. Hat das Antriebsaggregat genau dieses Drehmoment aufgebaut, so kann die Feststellbremse geöffnet werden, ohne dass das Kraftfahrzeug anrollt, beispielsweise nach hinten.

Wird die Feststellbremse geöffnet, bevor das Drehmoment aufgebaut wurde, so rollt das Kraftfahrzeug nach hinten. Wird sie zu spät geöffnet, also wenn das Drehmoment größer ist als das zum Halten des Kraftfahrzeugs benötigte Drehmoment, so äußert sich dies in einem Verspannen des Kraftfahrzeugs gegen die geschlossene Feststellbremse. Es ist daher bei einer solchen Vorgehensweise notwendig, dass die Feststellbremse genau dann geöffnet wird, wenn mittels des Antriebsaggregats das zum Halten des Kraftfahrzeugs benötigte Drehmoment bereitgestellt wird. Dieses Drehmoment, welches auch als Haltdrehmoment bezeichne werden kann, kann aus einer Masse des Kraftfahrzeugs und einem Ausmaß der Steigung, beispielsweise einer Neigung des Untergrunds, ermittelt werden. Dieses Haltemoment wird an dem Antriebsaggregat eingestellt und die Feststellbremse idealerweise in dem Moment gelöst, in dem das von dem Antriebsaggregat bereitgestellte Drehmoment tatsächlich dem Haltedrehmoment entspricht.

Die Bestimmungen des Haltedrehmoments kann jedoch üblicherweise nicht mit hoher Genauigkeit erfolgen. Das bedeutet, dass in der Praxis ein zuverlässiges Halten des Kraftfahrzeugs im Stillstand bei dem Lösen der Feststellbremse nicht gewährleistet werden kann. Aus diesem Grund ist es nun zumindest in der ersten Betriebsart des Kraftfahrzeugs vorgesehen, bereits vor oder zumindest bei beziehungsweise während dem Lösen der Feststellbremse eine Drehzahlregelung der Traktionsmaschine vorzunehmen, nämlich auf eine dem Stillstand des Kraftfahrzeugs entsprechende Drehzahl.

Bei dem Lösen der Feststellbremse im Stillstand des Kraftfahrzeugs wird also die Solldrehzahl auf die dem Stillstand des Kraftfahrzeugs entsprechende Drehzahl gesetzt und anschließend die Drehzahlregelung der Traktionsmaschine durchgeführt, in deren Rahmen die Istdrehzahl der Traktionsmaschine auf die Solldrehzahl geregelt wird. Unter der Istdrehzahl ist hierbei die momentane Drehzahl der Traktionsmaschine zu verstehen.

Ist die Traktionsmaschine von dem wenigstens einem Rad des Kraftfahrzeugs entkoppelbar, so wird sie vor oder bei dem Lösen der Feststellbremse beziehungsweise dem Durchführen der Drehzahlregelung mit dem Rad geokoppelt, insbesondere starr. Im Falle der starren Kopplung der Traktionsmaschine mit dem Rad beträgt die dem Stillstand des Kraftfahrzeugs entsprechende Drehzahl üblicherweise null. Ist keine starre Kopplung vorgesehen, liegt also Schlupf zwischen der Traktionsmaschine und dem Rad vor, beispielsweise aufgrund einer Kupplung oder dergleichen, so kann die dem Stillstand des Kraftfahrzeugs entsprechende Drehzahl von null abweichen.

Es kann vorgesehen sein, das Regeln der Istdrehzahl auf die Solldrehzahl nur dann vorzunehmen, wenn die Istdrehzahl einer einer vorgegebenen Fahrrichtung entgegen gerichteten Drehzahl entspricht. Ist beispielsweise das Kraftfahrzeug auf eine Vorwärtsfahrt eingerichtet, beispielsweise durch entsprechende Einstellung eines Bedienelements, insbesondere eines Wählhebels, so wird die Istdrehzahl nur dann auf die Solldrehzahl geregelt, falls die Istdrehzahl auf eine Rückwärtsbewegung des Kraftfahrzeugs hindeutet. Ist hingegen das Kraftfahrzeug auf eine Rückwärtsfahrt eingestellt, wiederum zum Beispiel durch entsprechende Einstellung des Bedienelements, so wird die Istdrehzahl nur dann auf die Solldrehzahl geregelt, wenn die Istdrehzahl auf eine Vorwärtsbewegung des Kraftfahrzeugs hindeutet.

In anderen Worten wird in Abhängigkeit von der Einstellung des Kraftfahrzeugs beziehungsweise des Bedienelements eine Drehzahlbegrenzung der Istdrehzahl vorgenommen. Diese erfolgt derart, dass bei Einstellung auf die Vorwärtsfahrt die Vorwärtsbewegung des Kraftfahrzeug zugelassen und die Rückwärtsbewegung unterbunden wird. Umgekehrt wird bei Einstellung auf die Rückwärtsfahrt die Rückwärtsbewegung des Kraftfahrzeugs zugelassen und die Vorwärtsbewegung unterbunden.

Es kann selbstverständlich alternativ auch vorgesehen sein, die Drehzahlregelung derart durchzuführen, dass die Istdrehzahl auf ein vorgegebenes Drehzahlband geregelt wird, wobei das Drehzahlband nach unten durch eine Minimaldrehzahl und/oder nach oben durch eine Maximaldrehzahl begrenzt ist. Die Regelung wird durchgeführt, wenn die Istdrehzahl die Minimalmaldrehzahl - falls vorgegeben - nach unten unterschreitet und/oder wenn die Istdrehzahl die Maximaldrehzahl - falls vorgegeben - nach oben überschreitet. Beispielsweise werden/wird nun die Minimaldrehzahl und/oder die Maximaldrehzahl auf die dem Stillstand des Kraftfahrzeugs entsprechende Drehzahl gesetzt. Bevorzugt wird die Minimaldrehzahl auf diese Drehzahl gesetzt, wenn die Rückwärtsbewegung verhindert werden soll und die Maximaldrehzahl, wenn die Vorwärtsbewegung verhindert werden soll. Das Setzen der Minimaldrehzahl und/oder der Maximaldrehzahl kann insoweit beispielsweise anhand der Einstellung des Kraftfahrzeugs beziehungsweise des Bedienelements vorgenommen werden. Soll das Fahrzeug vollständig festgesetzt werden, also in beide Richtungen, so werden die Minimaldrehzahl und die Maximaldrehzahl gesetzt, beispielsweise beide auf die dem Stillstand entsprechende Drehzahl.

Die Erfindung sieht vor, dass mittels der Regelung aus einer Differenz zwischen der Istdrehzahl und der Solldrehzahl ein Solldrehmoment ermittelt und die Traktionsmaschine zum Bereitstellen des Solldrehmoments mittels einer Steuerung angesteuert wird. Die Differenz zwischen der Istdrehzahl und der Solldrehzahl bildet insoweit die Regelgröße der Regelung und das Solldrehmoment die Steuergröße. Die Istdrehzahl wird vorzugsweise mittels eines Drehzahlsensors gemessen oder aus wenigstens einer Zustandsgröße der elektrischen Maschine, beispielsweise einer Stromstärke und/oder Feldstärke, abgeschätzt.

Das Solldrehmoment beschreibt dasjenige Drehmoment, welches notwendig ist, um das Kraftfahrzeug im Stillstand zu halten. Zum Halten des Kraftfahrzeugs wird daher die Traktionsmaschine zum Breitstellen des Solldrehmoments angesteuert, nämlich mit Hilfe der Steuerung. Eine derartige Vorgehensweise ermöglicht ein schnelles Einstellen des zum Halten des Kraftfahrzeugs notwendigen Drehmoments an der Traktionsmaschine. Dies ist insbesondere der Fall, wenn ein die Regelung durchführender Regler Bestandteil einer Leistungselektronik ist, mittels welcher die Traktionsmaschine angesteuert wird. Insoweit sind bevorzugt die Regelung und die Steuerung in einer gemeinsamen Baueinheit, insbesondere einem Motorsteuergerät der Traktionsmaschine, angeordnet.

Eine bevorzugte Weiterbildung der Erfindung sieht vor, dass bei Vorliegen eines einer Vorwärtsbewegung des Kraftfahrzeugs entgegen gerichteten Solldrehmoments die Solldrehzahl entsprechend eines Anfahrdrehzahlverlaufs über der Zeit vergrößert wird und/oder bei Vorliegen eines an der Rückwärtsbewegung des Kraftfahrzeugs entgegen gerichteten Solldrehmoments die Solldrehzahl auf dem dem Stillstand entsprechenden Wert gehalten wird. Ist das Solldrehmoment der Vorwärtsbewegung des Kraftfahrzeugs entgegengerichtet, so würde bei einem Istdrehmoment der Traktionsmaschine, welche kleiner ist als das Solldrehmoment, sich das Kraftfahrzeug nach vorne in Bewegung setzen. Umgekehrt würde sich das Kraftfahrzeug bei dem Vorliegen des der Rückwärtsbewegung entgegen gerichteten Solldrehmoments nach hinten in Bewegung setzen.

Es kann nun vorgesehen sein, dass die Vorwärtsbewegung des Kraftfahrzeugs über der Zeit mit zunehmendem Ausmaß zugelassen wird. Liegt also das Solldrehmoment vor, welches der Vorwärtsbewegung entgegengerichtet ist, so kann die Solldrehzahl über der Zeit vergrößert werden, nämlich entsprechend des Anfahrdrehzahlverlaufs. In dem Anfahrdrehzahlverlauf ist ein Verlauf der Solldrehzahl über der Zeit hinterlegt. Beispielsweise sieht der Anfahrdrehzahlverlauf vor, dass die Solldrehzahl ausgehend von dem auf den Stillstand des Kraftfahrzeugs gerichteten Wert bis zu einer Maximaldrehzahl ansteigt, welche einer bestimmten Geschwindigkeit des Kraftfahrzeugs, beispielsweise Schrittgeschwindigkeit, entspricht.

Zusätzlich oder alternativ soll die Rückwärtsbewegung des Kraftfahrzeugs effektiv unterbunden werden, nämlich indem die Solldrehzahl auf dem dem Stillstand entsprechenden Wert gehalten wird, wenn das der Rückwärtsbewegung entgegen gerichtete Solldrehmoment vorliegt. Mit einer solchen Vorgehensweise wird ein besonders komfortabler Fahrbetrieb des Kraftfahrzeugs beziehungsweise ein besonders komfortables Anfahren des Kraftfahrzeugs realisiert.

Besonders vorteilhaft ist es, wenn unabhängig von der Ausrichtung des Solldrehmoments, also unabhängig davon, ob das der Vorwärtsbewegung oder der Rückwärtsbewegung entgegen gerichtete Solldrehmoment vorliegt, die Solldrehzahl erhöht wird, wiederum entsprechend des Anfahrdrehzahlverlaufs. Das bedeutet, dass das Kraftfahrzeug gemäß dem Anfahrdrehzahlverlauf nach vorne anfährt, unabhängig davon, ob der auf das Kraftfahrzeug wirkende Schwerkrafteinfluss auf die Vorwärtsbewegung oder die Rückwärtsbewegung gerichtet ist.

Eine weitere bevorzugte Ausgestaltung der Erfindung sieht vor, dass bei Überschreiten des Solldrehmoments durch ein von einem Fahrer des Kraftfahrzeugs und/oder eine Fahrerassistenzeinrichtung vorgegebenes Vorgabedrehmoment in eine zweite Betriebsart umgeschaltet und die Traktionsmaschine zum Bereitstellen des Vorgabedrehmoments angesteuert wird. Die erste Betriebsart soll solange durchgeführt werden, wie das Halten des Kraftfahrzeugs durch den Fahrer des Kraftfahrzeugs und/oder die Fahrerassistenzeinrichtung gewollt ist.

Sobald das von dem Fahrer beziehungsweise der Fahrerassistenzeinrichtung eingestellte beziehungsweise vorgegebene Vorgabedrehmoment größer ist als das Solldrehmoment, soll aus der ersten Betriebsart in die zweite Betriebsart umgeschaltet werden, in welche die Traktionsmaschine zum Bereitstellen des Vorgabedrehmoments angesteuert wird. Hierdurch wird ein rasches Anfahren aus dem Stillstand gewährleistet, sollte ein solches von dem Fahrer beziehungsweise der Fahrerassistenzeinrichtung gefordert werden. Besonders bevorzugt wird bei einer Betätigung der Feststellbremse, insbesondere bei einem Anziehen oder einem Lösen der Feststellbremse, von der zweiten Betriebsart in die erste Betriebsart umgeschaltet. Anders ausgedrückt wird das beschriebene Verfahren dann, insbesondere nur dann, durchgeführt, wenn zuvor das Kraftfahrzeug mittels der Feststellbremse festgesetzt war. Zusätzlich oder alternativ kann bei einer Betätigung der Betriebsbremse des Kraftfahrzeugs in die erste Betriebsart umgeschaltet werden, insbesondere auch bei nicht betätigter Feststellbremse.

Die Erfindung sieht vor, dass ein Bedienelement der Feststellbremse auf eine Betätigung überwacht wird, und bei Feststellen der Betätigung die Solldrehzahl auf den dem Stillstand entsprechenden Wert eingestellt und die Regelung durchgeführt wird. Das Bedienelement kann beispielsweise in einer ersten Stellung und in einer zweiten Stellung vorliegen. In der ersten Stellung ist die Feststellbremse zum Halten des Kraftfahrzeugs im Stillstand eingestellt. Mit dem Erreichen der zweiten Stellung hingegen gibt die Feststellbremse das Kraftfahrzeug frei, die Feststellbremse ist also gelöst. Bevorzugt ist es hierbei vorgesehen, dass die Feststellbremse erst unmittelbar mit dem Erreichen der zweiten Stellung des Bedienelements gelöst wird.

Zusätzlich ist es nun vorgesehen, dass die Solldrehzahl auf den Wert eingestellt und die Regelung durchgeführt wird, sobald festgestellt wird, dass das Bedienelement aus der ersten Stellung heraus in Richtung der zweiten Stellung verlagert wird. Aufgrund des Herausverlagerns des Bedienelements aus der ersten Stellung kann bereits das Lösen der Feststellbremse antizipiert werden. Entsprechend werden die notwendigen Vorkehrungen zum Halten des Kraftfahrzeugs mittels der Traktionsmaschine getroffen. Eine derartige Vorgehensweise sorgt für einen besonders hohen Komfort. Insbesondere wird zum Durchführen der Regelung in die erste Betriebsart gewechselt, sofern diese nicht ohnehin schon eingestellt ist.

Besonders bevorzugt ist vorgesehen, dass als Feststellbremse eine elektrische Feststellbremse verwendet und die Feststellbremse gelöst wird, sobald die Regelung durchgeführt wird. Beispielsweise ist also das Bedienelement lediglich mittelbar, beispielweise über eine elektrische Verbindung, insbesondere über ein Steuergerät, mit der Feststellbremse verbunden. Die Feststellbremse ist hierzu als elektrische Feststellbremse ausgestaltet, wird also elektrisch, insbesondere elektromotorisch, betätigt. Beispielsweise ist es nun vorgesehen, dass die Solldrehzahl bereits auf den Wert eingestellt und die Regelung durchgeführt wird, sobald das Bedienelement betätigt wird. Die Feststellbremse wird allerdings erst gelöst, sobald die Regelung tatsächlich aktiv ist. Beispielsweise ist hierzu das Steuergerät entsprechend eingestellt.

Eine weitere bevorzugte Ausführungsform der Erfindung sieht vor, dass vor dem Einstellen der Solldrehzahl auf den dem Stillstand entsprechenden Wert und/oder vor dem Durchführen der Regelung ein zum ortsfesten Halten des Kraftfahrzeugs notwendiges Haltedrehmoment aus wenigstens einer Zustandsgröße abgeschätzt wird, wobei das Haltedrehmoment zur Vorsteuerung der Regelung verwendet wird und/oder eine Betriebsbremse des Kraftfahrzeugs zum Bereitstellen eines einem Teil des Haltedrehmoments entsprechenden Bremsdrehmoment angesteuert und die Regelung mit einer Differenz zwischen dem Haltedrehmoment und dem Bremsdrehmoment vorgesteuert wird.

Bei einer derartigen Vorgehensweise können also grundsätzlich zwei Varianten unterschieden werden, wobei bei der ersten Variante die Betriebsbremse außer Funktion bleibt und in der zweiten Variante zum Halten des Kraftfahrzeugs eingesetzt wird. In beiden Varianten ist es zunächst vorgesehen, das Haltedrehmoment abzuschätzen, nämlich aus der wenigstens einen Zustandsgröße. Als Zustandsgröße kann hierbei beispielsweise die Masse des Kraftfahrzeugs dienen. Zusätzlich wird beispielsweise eine Neigung der Steigung herangezogen. Das Haltedrehmoment entspricht demjenigen Drehmoment, welches insgesamt bereitgestellt werden muss, um das Kraftfahrzeug ortsfest zu halten.

Vorstehend wurde bereits angedeutet, dass das Abschätzen des Haltedrehmoments mit Ungenauigkeiten behaftet ist. Es kann jedoch herangezogen werden, um das Bestimmen des Solldrehmoments mittels der Regelung zu beschleunigen. Hierzu erfolgt eine Vorsteuerung der Regelung unter Verwendung des Haltedrehmoments. Beispielsweise wird also zu Beginn der Regelung das Haltedrehmoment als Solldrehmoment verwendet.

Zudem kann es vorgesehen sein, dass die Betriebsbremse verwendet wird, um das Fahrzeug zu halten. Hierzu wird diese derart angesteuert, dass sie (nur) einen Teil des Haltedrehmoments bereitstellt, welches also nicht zum Halten des Kraftfahrzeugs ausreicht. Der zum Halten des Kraftfahrzeugs fehlende Teil des Haltedrehmoments wird nachfolgend mittels der Traktionsmaschine bereitgestellt. Hierzu wird beispielsweise die Regelung mit der Differenz zwischen dem Haltedrehmoment und dem Bremsdrehmoment vorgesteuert, um das Halten des Kraftfahrzeugs besonders rasch umzusetzen. Aufgrund der Vorsteuerung der Regelung wird das Halten des Kraftfahrzeugs besonders zuverlässig und rasch umgesetzt.

Die Erfindung sieht vor, dass bei einem Unterschreiten einer Drehmomentschwelle durch das Vorgabedrehmoment und bei Erreichen einer dem Stillstand des Kraftfahrzeugs entsprechenden Istdrehzahl die Solldrehzahl auf den dem Stillstand entsprechenden Wert eingestellt und die Regelung durchgeführt und anschließend die Feststellbremse zum Halten des Kraftfahrzeugs angesteuert wird, wobei das mittels der Regelung ermittelte Solldrehmoment zwischengespeichert wird. Diese Vorgehensweise wird bei einem Anhalten des Kraftahrzeugs verwendet, welches auftritt, wenn das von dem Fahrer beziehungsweise der Fahrerassistenzeinrichtung vorgegebene Vorgabedrehmoment zu einer Verringerung der Geschwindigkeit des Kraftfahrzeugs führt und die Geschwindigkeit des Kraftfahrzeugs aufgrund dieser Verringerung des Vorgabedrehmoments tatsächlich auf null verringert wird.

Unterschreitet das Vorgabedrehmoment die Drehmomentschwelle, so kann darauf geschlossen werden, dass das Kraftfahrzeug tatsächlich angehalten werden soll. Ist dies der Fall, so wird mit dem Erreichen des Stillstands die Regelung der Istdrehzahl der Traktionsmaschine auf die Solldrehzahl durchgeführt. Hierbei wird die Solldrehzahl wiederum derart gewählt, dass sie einer Drehzahl entspricht, die bei dem Stillstand des Kraftfahrzeugs vorliegt. Nach dem Erreichen des Stillstands durch das Kraftfahrzeug wird dieses also zuverlässig im Stillstand gehalten, nämlich unter Verwendung der Traktionsmaschine. Hierzu stellt diese das mittels der Regelung ermittelte Solldrehmoment bereit. Dieses wird nun zwischengespeichert, insbesondere genau dann, wenn die Feststellbremse zum Halten des Kraftfahrzeugs angesteuert wird oder zumindest unmittelbar vorher. Unter Verwendung des Solldrehmoments kann nachfolgend ein äußerst komfortables Anfahren des Kraftfahrzeugs realisiert werden.

Schließlich ist im Rahmen der Erfindung vorgesehen dass nach dem Ansteuern der Feststellbremse zum Halten des Kraftfahrzeugs die Regelung unterbrochen und vor oder bei dem nachfolgenden Lösen der Feststellbremse die Regelung wieder aufgenommen und mit dem zwischengespeicherten Solldrehmoment vorgesteuert wird. Es wurde bereits erläutert, dass vor oder bei dem Ansteuern der Feststellbremse das Solldrehmoment zwischengespeichert werden soll. Nach dem Ansteuern der Feststellbremse ist das Kraftfahrzeug zuverlässig mittels dieser im Stillstand gehalten. Entsprechend kann die Regelung unterbrochen werden, insbesondere um Energie zu sparen.

Wird nachfolgend die Feststellbremse wieder gelöst, so wird die Regelung wieder aufgenommen, um das Kraftfahrzeug im Stillstand zu halten. Hierbei wird sie mit dem zwischengespeicherten Solldrehmoment vorgesteuert. Entsprechend wird die Zeit bis zum Einstellen des zum Halten des Kraftfahrzeugs notwendigen Solldrehmoments an der Traktionsmaschine drastisch verringert, sodass im Idealfall das Kraftfahrzeug nach dem Lösen der Feststellbremse zuverlässig zumindest zunächst unter Verwendung der Traktionsmaschine im Stillstand gehalten ist.

Die Erfindung betrifft weiterhin ein Kraftfahrzeug, insbesondere zur Durchführung des Verfahrens gemäß Anspruch 1.

Auf die Vorteile einer derartigen Ausgestaltung des Kraftfahrzeugs beziehungsweise einer derartigen Vorgehensweise wurde bereits hingewiesen. Sowohl das Kraftfahrzeug als auch das Verfahren zu seinem Betreiben können gemäß den Ausführungen im Rahmen dieser Beschreibung weitergebildet sein, sodass insoweit auf diese verwiesen wird.

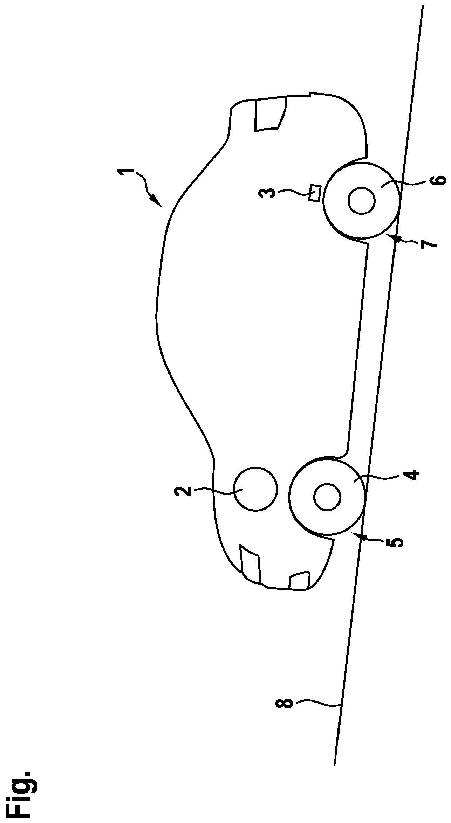

Die Erfindung wird nachfolgend anhand der in der Zeichnung dargestellten Ausführungsbeispiele näher erläutert, ohne dass eine Beschreibung der Erfindung erfolgt. Dabei zeigt die einzige
- Figur: eine schematische Darstellung eines Kraftfahrzeugs.

Die Figur zeigt ein Kraftfahrzeug 1, welches über eine elektrische Traktionsmaschine 2 und eine Feststellbremse 3 verfügt. Die Traktionsmaschine 2 dient beispielsweise dem Antreiben von Rädern 4 einer ersten Radachse 5 wohingegen die Feststellbremse 3 auf Räder 6 einer zweiten Radachse 7 wirkt. Das Kraftfahrzeug 1 steht auf einem Untergrund 8, nämlich an beziehungsweise auf einer Steigung. Entsprechend weist der Untergrund 8 eine bestimmte Neigung auf. Das Kraftfahrzeug 1 befindet sich im Stillstand. Hierbei wirkt die Feststellbremse 3 auf die Räder 6 der zweiten Radachse 7 zum Halten des Kraftfahrzeugs 1 im Stillstand ein. Die Traktionsmaschine 2 ist zunächst deaktiviert.

Um ein komfortables Anfahren des Kraftfahrzeugs 1 auf dem geneigten Untergrund 8 zu ermöglichen, ist es in einer ersten Betriebsart des Kraftfahrzeugs 1 vorgesehen, vor oder bei einem Lösen der Feststellbremse 3 für die Traktionsmaschine 2 eine Solldrehzahl vorzugeben, welche einer im Stillstand des Kraftfahrzeugs 1 vorliegenden Drehzahl entspricht. Nachfolgend wird - ebenfalls noch vor oder bei dem Lösen der Feststellbremse 3 - eine Drehzahlregelung der Traktionsmaschine 2 eingeleitet und nachfolgend durchgeführt. Im Rahmen der Drehzahlregelung wird eine Istdrehzahl der Traktionsmaschine 2 auf die Solldrehzahl geregelt.

Nach dem oder während dem Einleiten der Drehzahlregelung wird die Feststellbremse 3 gelöst. Aufgrund der Drehzahlregelung auf die dem Stillstand des Kraftfahrzeugs 1 entsprechende Solldrehzahl hält die Traktionsmaschine 2 das Kraftfahrzeug 1 auch auf dem geneigten Untergrund 8 im Stillstand. Nachfolgend kann ein Fahrer des Kraftfahrzeugs 1 dieses in Bewegung setzen.

Mit der beschriebenen Vorgehensweise wird sichergestellt, dass bei dem Lösen der Feststellbremse 3 kein oder allenfalls ein geringes ungewolltes Rollen des Kraftfahrzeugs 1 auftritt. Das Kraftfahrzeug 1 kann sich also nicht ungewollt aus dem Stillstand in Bewegung setzen. Dies ist für den Fahrer des Kraftfahrzeugs 1 besonders komfortabel.

## Patentansprüche

1. Verfahren zum Betreiben eines Kraftfahrzeugs (1), wobei das Kraftfahrzeug (1) eine elektrische Traktionsmaschine (2) aufweist, wobei in einer ersten Betriebsart des Kraftfahrzeugs (1) bei einem Unterschreiten einer Drehmomentschwelle durch ein von einem Fahrer des Kraftfahrzeugs (1) und/oder einer Fahrerassistenzeinrichtung vorgegebenes Vorgabedrehmoment und bei Erreichen einer dem Stillstand des Kraftfahrzeugs (1) entsprechenden Istdrehzahl eine Solldrehzahl für eine Drehzahlregelung der Traktionsmaschine (2) auf einen dem Stillstand des Kraftfahrzeug (1) entsprechenden Wert eingestellt, eine Istdrehzahl der Traktionsmaschine (2) auf die Solldrehzahl geregelt sowie anschließend die Feststellbremse (3) zum Halten des Kraftfahrzeugs (1) angesteuert und nach dem Ansteuern der Feststellbremse (3) die Regelung unterbrochen wird, wobei mittels der Regelung aus einer Differenz zwischen der Istdrehzahl und der Solldrehzahl ein Solldrehmoment ermittelt und die Traktionsmaschine (2) zum Bereitstellen des Solldrehmoments mittels einer Steuerung angesteuert wird und das mittels der Regelung ermittelte Solldrehmoment zwischengespeichert wird, und wobei ein Bedienelement der Feststellbremse (3) auf eine Betätigung überwacht wird und bei Feststellen der Betätigung die Solldrehzahl auf den dem Stillstand entsprechenden Wert eingestellt sowie die Regelung im Stillstand des Kraftfahrzeugs (1) wieder aufgenommen und mit dem zwischengespeicherten Solldrehmoment vorgesteuert wird, wobei die Feststellbremse (3) erst gelöst wird, sobald die Regelung aktiv ist.

2. Verfahren nach Anspruch 1, **dadurch gekennzeichnet, dass** bei Vorliegen eines einer Vorwärtsbewegung des Kraftfahrzeugs (1) entgegen gerichteten Solldrehmoments die Solldrehzahl entsprechend eines Anfahrdrehzahlverlaufs über der Zeit vergrößert wird und/oder bei Vorliegen eines einer Rückwärtsbewegung des Kraftfahrzeugs (1) entgegen gerichteten Solldrehmoments die Solldrehzahl auf dem dem Stillstand entsprechenden Wert gehalten wird.

3. Verfahren nach einem der vorhergehenden Ansprüche, **dadurch gekennzeichnet, dass** bei Überschreiten des Solldrehmoments durch das Vorgabedrehmoment in eine zweite Betriebsart umgeschaltet und die Traktionsmaschine (2) zum Bereitstellen des Vorgabedrehmoments angesteuert wird.

4. Verfahren nach einem der vorhergehenden Ansprüche, **dadurch gekennzeichnet, dass** vor dem Einstellen der Solldrehzahl auf den dem Stillstand entsprechenden Wert und/oder vor dem Durchführen der Regelung ein zum ortsfesten Halten des Kraftfahrzeugs (1) notwendiges Haltedrehmoment aus wenigstens einer Zustandsgröße abgeschätzt wird, wobei das Haltedrehmoment zur Vorsteuerung der Regelung verwendet wird und/oder eine Betriebsbremse des Kraftfahrzeugs (1) zum Bereitstellen eines einem Teil des Haltedrehmoments entsprechenden Bremsdrehmoments angesteuert und die Regelung mit einer Differenz zwischen dem Haltedrehmoment und dem Bremsdrehmoment vorgesteuert wird.

5. Kraftfahrzeug (1) dass eine elektrische Traktionsmaschine (2) aufweist, wobei das Kraftfahrzeug (1) dazu ausgebildet ist, in einer ersten Betriebsart des Kraftfahrzeugs (1) bei einem Unterschreiten einer Drehmomentschwelle durch ein von einem Fahrer des Kraftfahrzeugs (1) und/oder einer Fahrerassistenzeinrichtung vorgegebenes Vorgabedrehmoment und bei Erreichen einer dem Stillstand des Kraftfahrzeugs (1) entsprechenden Istdrehzahl eine Solldrehzahl für eine Drehzahlregelung der Traktionsmaschine (2) auf einen dem Stillstand des Kraftfahrzeug (1) entsprechenden Wert einzustellen, eine Istdrehzahl der Traktionsmaschine (2) auf die Solldrehzahl zu regeln sowie anschließend die Feststellbremse (3) zum Halten des Kraftfahrzeugs (1) anzusteuern und nach dem Ansteuern der Feststellbremse (3) die Regelung zu unterbrechen, wobei mittels der Regelung aus einer Differenz zwischen der Istdrehzahl und der Solldrehzahl ein Solldrehmoment ermittelt und die Traktionsmaschine (2) zum Bereitstellen des Solldrehmoments mittels einer Steuerung angesteuert wird und das mittels der Regelung ermittelte Solldrehmoment zwischengespeichert wird, und wobei ein Bedienelement der Feststellbremse (3) auf eine Betätigung überwacht wird und bei Feststellen der Betätigung die Solldrehzahl auf den dem Stillstand entsprechenden Wert eingestellt sowie die Regelung im Stillstand des Kraftfahrzeugs (1) wieder aufgenommen und mit dem zwischengespeicherten Solldrehmoment vorgesteuert wird, wobei die Feststellbremse (3) erst gelöst wird, sobald die Regelung aktiv ist.

## Claims

1. Method for operating a motor vehicle (1), wherein the motor vehicle (1) has an electric traction machine (2), wherein in a first operation mode of the motor vehicle (1), when a torque threshold is undershot by a preset torque predetermined by a driver of the motor vehicle (1) and/or a driver assistance device, and when an actual engine speed corresponding to the standstill of the motor vehicle (1) is reached, a target engine speed for an engine speed regulation of the traction machine (2) is set to a value corresponding to the standstill of the motor vehicle (1), an actual engine speed of the traction machine (2) is regulated to the target engine speed, and subsequently the parking brake (3) is controlled to retain the motor vehicle (1) and after the controlling of the parking brake (3) the regulation is interrupted, wherein by means of the regulation a target torque is determined from a difference between the actual engine speed and the target engine speed and the traction machine (2) is controlled to provide the target torque by means of a controller and the target torque determined by means of the regulation is temporarily stored, and wherein an operating element of the parking brake (3) is monitored for an actuation and when the actuation is determined the target engine speed is set to the value corresponding to the standstill and the regulation is resumed during standstill of the motor vehicle (1) and is pilot-controlled with the temporarily stored target torque, wherein the parking brake (3) is only released as soon as the regulation is active.

2. Method according to claim 1, **characterised in that** in the presence of a target torque directed against a forward movement of the motor vehicle (1) the target engine speed is increased corresponding to a starting speed profile over time and/or in the presence of a target torque directed against a backward movement of the motor vehicle (1) the target engine speed is maintained at the value corresponding to the standstill.

3. Method according to any of the preceding claims, **characterised in that** when the target torque is overshot by the preset torque, a switch is made to the second operation mode and the traction machine (2) is controlled to provide the preset torque.

4. Method according to any of the preceding claims, **characterised in that** prior to the setting of the target engine speed to the value corresponding to the standstill and/or prior to the carrying out of the regulation, a retaining torque necessary for holding the motor vehicle (1) stationary is estimated from at least one state variable, wherein the retaining torque is used for pilot-controlling the regulation and/or an operating brake of the motor vehicle (1) is controlled to provide a braking torque corresponding to a part of the retaining torque and the regulation is pilot-controlled with a difference between the retaining torque and the braking torque.

5. Motor vehicle (1) which has an electric traction machine (2), wherein the motor vehicle (1) is configured, in a first operation mode of the motor vehicle (1), when a torque threshold is undershot by a preset torque predetermined by a driver of the motor vehicle (1) and/or a driver assistance device and when an actual engine speed corresponding to the standstill of the motor vehicle (1) is reached, to set a target engine speed for an engine speed regulation of the traction machine (2) to a value corresponding to the standstill of the motor vehicle (1), to regulate an actual engine speed of the traction machine (2) to the target engine speed and subsequently to control the parking brake (3) to hold the motor vehicle (1) stationary, and after the controlling of the parking brake (3) to interrupt the regulation, wherein by means of the regulation a target torque is determined from a difference between the actual engine speed and the target engine speed and the traction machine (2) is controlled to provide the target torque by means of a controller and the target torque determined by means of the regulation is temporarily stored, and wherein an operating element of the parking brake (3) is monitored for an actuation and when the actuation is determined the target engine speed is set to the value corresponding to the standstill and the regulation is resumed during standstill of the motor vehicle (1) and is pilot-controlled with the temporarily stored target torque, wherein the parking brake (3) is only released as soon as the regulation is active.

## Revendications

1. Procédé de fonctionnement d'un véhicule automobile (1), dans lequel le véhicule automobile (1) comporte une machine de traction électrique (2), dans lequel dans un premier mode de fonctionnement du véhicule automobile (1), lorsqu'un couple par défaut spécifié par un conducteur du véhicule automobile (1) et/ou un dispositif d'assistance à la conduite passe en dessous d'un seuil de couple, et lorsqu'une vitesse de rotation effective correspondant à l'arrêt du véhicule automobile (1) est atteinte, une vitesse de rotation de consigne pour une régulation de la vitesse de rotation de la machine de traction (2) est réglée sur une valeur correspondant à l'arrêt du véhicule automobile (1), une vitesse de rotation effective de la machine de traction (2) est réglée sur la vitesse de rotation de consigne, puis le frein de stationnement (3) pour arrêter le véhicule automobile (1) est amorcé et après la commande d'amorçage du frein de stationnement (3), la régulation est interrompue, moyennant quoi un couple de consigne est déterminé au moyen de la régulation résultant d'une différence entre la vitesse de rotation effective et la vitesse de rotation de consigne, et la machine de traction (2) destinée à fournir le couple de consigne au moyen d'une commande est amorcée et le couple de consigne déterminé au moyen de la régulation est mémorisé temporairement, et moyennant quoi un élément de commande du frein de stationnement (3) est contrôlé au niveau d'un actionnement et si l'actionnement est constaté, la vitesse de rotation de consigne est réglée sur la valeur correspondant à l'arrêt, de même que la régulation à l'arrêt du véhicule automobile (1) est reprise et précommandée avec le couple de consigne mémorisé temporairement, moyennant quoi le frein de stationnement (3) n'est desserré que lorsque la régulation est active.

2. Procédé selon la revendication 1, **caractérisé en ce que** en cas de présence d'un couple de consigne dirigé à l'encontre d'un mouvement avant du véhicule automobile (1), la vitesse de rotation de consigne est augmentée en fonction d'un régime temporel de vitesse de démarrage et/ou en cas de présence d'un couple de consigne dirigé à l'encontre d'un mouvement arrière du véhicule automobile (1), la vitesse de rotation de consigne est maintenue à la valeur correspondant à l'arrêt.

3. Procédé selon l'une quelconque des revendications précédentes, **caractérisé en ce que** lorsque le couple par défaut dépasse le couple de consigne, une commutation dans un second mode de fonctionnement a lieu et la machine de traction (2) est commandée pour fournir le couple par défaut.

4. Procédé selon l'une quelconque des revendications précédentes, **caractérisé en ce que** avant le réglage de la vitesse de rotation de consigne sur la valeur correspondant à l'arrêt et/ou avant la réalisation de la régulation, un couple d'arrêt nécessaire à l'arrêt stationnaire du véhicule automobile (1) à partir d'au moins une grandeur d'état est évalué, moyennant quoi le couple d'arrêt pour la précommande de régulation est utilisé et/ou un frein de fonctionnement du véhicule automobile (1) pour fournir un couple de freinage correspondant à une partie du couple d'arrêt est amorcé et la régulation est précommandée avec une différence entre le couple d'arrêt et le couple de freinage.

5. Véhicule automobile (1) comportant une machine de traction électrique (2) dans lequel
le véhicule automobile (1) est conçu de telle manière que dans un premier mode de fonctionnement du véhicule automobile (1), lorsqu'un couple par défaut spécifié par un conducteur du véhicule automobile (1) et/ou un dispositif d'assistance à la conduite passe en dessous d'un seuil de couple, et lorsqu'une vitesse de rotation effective correspondant à l'arrêt du véhicule automobile (1) est atteinte, une vitesse de rotation de consigne pour une régulation de la vitesse de rotation de la machine de traction (2) est réglée sur une valeur correspondant à l'arrêt du véhicule automobile (1), une vitesse de rotation effective de la machine de traction (2) est réglée sur la vitesse de rotation de consigne, puis le frein de stationnement (3) pour arrêter le véhicule automobile (1) est amorcé et après la commande d'amorçage du frein de stationnement (3), la régulation est interrompue, moyennant quoi un couple de consigne est déterminé au moyen de la régulation résultant d'une différence entre la vitesse de rotation effective et la vitesse de rotation de consigne, et la machine de traction (2) destinée à fournir le couple de consigne au moyen d'une commande est amorcée et le couple de consigne déterminé au moyen de la régulation est mémorisé temporairement, et moyennant quoi un élément de commande du frein de stationnement (3) est contrôlé au niveau d'un actionnement et si l'actionnement est constaté, la vitesse de rotation de consigne est réglée sur la valeur correspondant à l'arrêt, de même que la régulation à l'arrêt du véhicule automobile (1) est reprise et précommandée avec le couple de consigne mémorisé temporairement, moyennant quoi le frein de stationnement (3) n'est desserré que lorsque la régulation est active.
